# FASCICULE DE BREVET EUROPEEN

(11) **EP 4 054 986 B1**
(45) Date de publication et mention de la délivrance du brevet: **05.08.2026**
(21) Numéro de dépôt: 20816269.3
(22) Date de dépôt: 05.11.2020
(51) Int. Cl.: C03B 23/033, C03B 23/035, C03B 27/04

(54) **PROCÉDÉ ET DISPOSITIF DE BOMBAGE D'UNE FEUILLE DE VERRE**
VERFAHREN UND VORRICHTUNG ZUM BIEGEN EINER GLASSCHEIBE
METHOD AND DEVICE FOR BENDING A GLASS SHEET

(30) Priorité: 08.11.2019 FR 1912591
(43) Date de publication de la demande: 14.09.2022
(73) Titulaire: Saint-Gobain Sekurit France, 60150 Thourotte (FR)
(72) Inventeur: RAPENNE, Thibault, 60400 NOYON (FR); LAGNEAUX, Robert, 60350 ATTICHY (FR)
(74) Mandataire: SAINT-GOBAIN SEKURIT FRANCE
(86) Numéro de dépôt international: PCT/FR2020/052003
(87) Numéro de publication internationale: WO 2021/089946

(56) Documents cités:
- JP-A- 2005 179 124
- US-A1- 2006 010 916

## Description

La présente invention concerne un procédé et un dispositif de bombage d'une feuille de verre, en particulier du type où la feuille de verre portée à une température de ramollissement passe par déplacement continu entre un lit de rouleaux inférieurs et un lit de rouleaux supérieurs qui imposent à la feuille de verre un trajet courbe dans la direction de déplacement de la feuille de verre pour bomber la feuille de verre laquelle est alors immédiatement refroidie pour être solidifiée dans sa forme bombée.

Cette technique permet de produire des feuilles de verre présentant une courbure dans la direction de déplacement des feuilles de verre entre les deux lits de rouleaux. Elle permet ainsi de produire des feuilles de verre bombées selon des formes cylindriques, mais aussi des formes bombées non cylindriques plus complexes du fait qu'elle permet aussi de conférer à la feuille de verre une courbure dans la direction perpendiculaire à sa direction de déplacement entre les deux lits de rouleaux en fonction de la forme des rouleaux des deux lits de rouleaux.

Cette technique est notamment utilisée pour la réalisation de vitrages automobiles, par exemple du type vitres latérales de véhicule automobile lesquelles présentent généralement une surface globalement torique. Elle est habituellement mise en œuvre avec des cadences de production très grandes dues notamment à la possibilité de faire suivre des feuilles de verre espacées les unes des autres de quelques centimètres seulement entre les lits de rouleaux inférieurs et supérieurs. Elles permettent une bonne reproductibilité du galbe et de la qualité optique des vitrages finaux.

Cette technique est décrite notamment dans US 4,139,359, US 4,540,425, US 4,540,426, US 5,236,487, US 6,598,427, US 2007/0084245 A1 et US 2015/0259234 A1.

Toutefois, les formes de ces feuilles de verre bombées deviennent de plus en plus complexes. Afin d'éviter d'usiner des lits de rouleaux spécifiques et de changer les lits de rouleaux à chaque nouvelle série de feuilles de verre bombées, sachant que ces opérations sont longues et doivent être précises, US 2006/0010916 A1 a proposé une technologie consistant à réaliser un soufflage d'air en continu sur au moins une face des feuilles de verre lors de leur passage entre les lits de rouleaux dans des conditions capables d'influencer de façon dissymétrique la concavité finale des feuilles de verre bombées par rapport à ce qu'aurait donné le bombage final sans ledit soufflage. Ce soufflage d'air en continu est réalisé au moyen d'au moins une buse fixe placée entre des rouleaux consécutifs à un emplacement où la feuille de verre est encore à l'état ramolli. Ce soufflage d'air permet ainsi de modifier le bombage résultant des feuilles de verre dans la direction perpendiculaire à leur défilement entre les lits de rouleaux.

Il existe aussi aujourd'hui un besoin de produire des feuilles de verre présentant un bombage dissymétrique dans la direction de défilement de la feuille de verre entre les lits de rouleaux.

Ce besoin existe notamment pour les vitres latérales de véhicules automobiles. Pour ces dernières, il est souhaitable que la partie supérieure de la vitre, dans sa position de montage dans le véhicule automobile, soit sur-bombée - c'est-à-dire présente localement un rayon de courbure plus petit - de manière à accommoder l'influence de l'aérodynamique du véhicule lors de la fermeture de la vitre latérale pendant le roulage à vitesse élevée.

En effet, lors d'un roulage à vitesse élevée, les parties latérales du véhicule sont le siège d'une dépression qui tend à « tirer » la vitre latérale vers l'extérieur du véhicule. Dans ces conditions, lorsque la fenêtre est ouverte, il peut arriver lors d'une opération de fermeture de la vitre que celle-ci se déforme et échappe au joint de scellage de la partie supérieure de la portière, engendrant ainsi une nuisance sonore et une absence d'étanchéité à la pluie.

Ce phénomène est évitable en sur-bombant légèrement la partie supérieure de la vitre latérale sans modifier la forme globale de la vitre latérale afin de ne pas affecter le style du véhicule.

Mais la technique de bombage précédemment décrite ne permet pas de réaliser un tel sur-bombage en partie supérieure des vitres latérales de voitures. Ceci est dû au fait que lors de son passage entre les lits de rouleaux, le bord supérieur de la vitre s'étend transversalement à la direction de son déplacement entre les lits de rouleaux alors que les lits de rouleaux confèrent un rayon de courbure fixe à chaque section de la vitre dans la direction de déplacement de la vitre entre eux. Et le soufflage d'air en continu par une ou plusieurs buses fixes conformément à US 2006/0010916 A1 permettrait seulement d'obtenir un sur-bombage de la vitre autour d'un axe s'étendant dans la direction de déplacement de la vitre entre les lits de rouleaux.

Un but de la présente invention est de pouvoir répondre au besoin précité. Elle vise ainsi à fournir une technologie permettant de réaliser un sur-bombage dans la partie supérieure des vitres latérales de véhicule automobile. Plus généralement, un but de l'invention est de fournir une technologie permettant de varier le profil de bombage de feuilles de verre au-delà des possibilités procurées dans l'art antérieur.

A cette fin, la présente invention propose un procédé de bombage d'une feuille de verre, comprenant :
- le passage par déplacement continu de la feuille de verre portée à une température de ramollissement dans un dispositif conformateur dans lequel la feuille de verre est, au fur et à mesure de son passage dans le dispositif conformateur, bombée et soumise à un refroidissement forcé pour solidifier l'ensemble de la feuille de verre à l'état bombée, et
- le soufflage de gaz, de préférence de l'air, sur au moins une face de la feuille de verre lors de son passage dans le dispositif conformateur lequel soufflage de gaz est appliqué sur l'au moins une face de la feuille de verre en amont du refroidissement forcé par rapport à la direction de déplacement de la feuille de verre dans le dispositif conformateur,

dans lequel ledit soufflage de gaz :
   - est réalisé selon des conditions aptes à provoquer une modification de la forme du bombage de la feuille de verre obtenue après son passage dans le dispositif conformateur par rapport à la forme du bombage qui serait obtenue en l'absence dudit soufflage de gaz, et
   - comprend ou consiste en au moins un soufflage local de gaz impactant une face de la feuille de verre que de manière locale,
le procédé comprenant en outre la commande du soufflage local de gaz en fonction du temps écoulé à compter d'une détection de l'arrivée de la feuille de verre dans le dispositif conformateur.

La feuille de verre pénètre donc dans le dispositif conformateur à une température de ramollissement, ce qui permet la déformation plastique de la feuille de verre dans le dispositif conformateur pour la rendre bombée. Le refroidissement forcé qui sert à solidifier l'ensemble de la feuille de verre à l'état bombée correspond généralement à un traitement thermique de la feuille de verre qui aboutit à son renforcement mécanique par la génération de contraintes mécaniques internes dans celle-ci. Il s'agit le plus fréquemment d'une trempe thermique ou bien d'une semi-trempe thermique, également dénommée durcissement thermique. Le refroidissement forcé n'est généralement pas appliqué simultanément à l'ensemble de la feuille de verre dans le dispositif conformateur, mais au fur et à mesure de son passage dans le dispositif conformateur, ce qui a effet de la solidifier à l'état bombée au fur et à mesure de son passage dans le dispositif conformateur jusqu'à ce que l'ensemble de la feuille de verre soit solidifiée.

Généralement, le bombage est exercé avant le refroidissement forcé, mais le bombage et le refroidissement forcé peuvent aussi être exercés sur les feuilles de façon quasi-simultanée.

Grâce à la commande du soufflage local de gaz sur la face de la feuille de verre en fonction de la détection de l'arrivée de la feuille de verre dans le dispositif conformateur, il est procuré une plus grande latitude dans les possibilités d'influer sur la forme finale du bombage de la feuille de verre. Les conditions de température et de pression du soufflage de gaz sont préférentiellement choisies par l'homme du métier de manière à créer dans la ou les zones d'impact du soufflage de gaz local sur la feuille de verre un gradient thermique qui se traduira après refroidissement et solidification de la feuille de verre par une modification du bombage de la feuille de verre dans la zone correspondante. Le soufflage local de gaz peut être appliqué avant le bombage ou entre le bombage et le refroidissement forcé.

Suivant des modes de réalisation préférés, le procédé de l'invention comprend une ou plusieurs des caractéristiques suivantes :
- la commande du soufflage local de gaz comprend une ou plusieurs ou l'ensemble des trois actions suivantes : le déplacement de la zone d'impact du soufflage local de gaz sur la face de la feuille de verre transversalement à la direction de déplacement de la feuille de verre dans le dispositif conformateur en fonction du temps écoulé à compter de la détection de l'arrivée de la feuille de verre dans le dispositif conformateur ; l'activation et la désactivation du soufflage local de gaz en fonction du temps écoulé à compter de la détection de l'arrivée de la feuille de verre dans le dispositif conformateur ; et la modification de la pression du gaz de soufflage local en fonction du temps écoulé à compter de la détection de l'arrivée de la feuille de verre dans le dispositif conformateur ;
- le procédé comprend l'utilisation d'au moins une buse pour réaliser le soufflage local de gaz, et le déplacement de la buse transversalement à la direction de déplacement de la feuille de verre en fonction du temps écoulé à compter de la détection de l'arrivée de la feuille de verre pour réaliser le déplacement de la zone d'impact du soufflage local de gaz sur la face de la feuille de verre transversalement à la direction de déplacement de la feuille de verre dans le dispositif conformateur ;
- le refroidissement forcé de la feuille de verre comprend ou consiste en la trempe thermique ou le durcissement thermique de la feuille de verre ;
- le procédé comprend l'application du soufflage local de gaz au sein d'une zone partielle d'une face de la feuille de verre, la zone partielle présentant une forme allongée s'étendant transversalement à la direction de déplacement de la feuille de verre dans le dispositif conformateur, la zone d'impact du soufflage local de gaz sur la face de la feuille de verre étant déplacée en fonction du temps écoulé à compter d'une détection de l'arrivée de la feuille de verre dans le dispositif conformateur de manière à être déplacée au sein de ladite zone partielle pendant le déplacement de la feuille de verre dans le dispositif conformateur ;
- le procédé comprend la réalisation du soufflage de gaz selon des conditions provoquant une augmentation locale d'une concavité du bombage de la feuille de verre obtenue après son passage dans le dispositif conformateur par rapport à la concavité du bombage qui serait obtenue en l'absence du soufflage de gaz, ladite augmentation locale du bombage étant située le long d'un bord de la feuille de verre s'étendant transversalement à la direction de défilement de la feuille de verre ;
- la feuille de verre est une vitre latérale de véhicule automobile et le procédé comprend la commande du soufflage de gaz de manière à provoquer une augmentation locale du bombage située le long d'un bord supérieur de la vitre latérale de véhicule automobile par rapport à son montage prévu dans un véhicule automobile ;
- le dispositif conformateur comprend un lit de rouleaux inférieurs et un lit de rouleaux supérieurs et le procédé comprend le passage par déplacement continu de la feuille de verre portée à une température de ramollissement, entre le lit de rouleaux inférieurs et le lit de rouleaux supérieurs lesquels sont agencés pour imposer à la feuille de verre un trajet courbe dans la direction de déplacement de la feuille de verre de manière à bomber la feuille de verre.

Le procédé de l'invention s'applique à des feuilles de verre individuelles ayant préférentiellement une épaisseur comprise dans la plage allant de 0,49 à 6,1 mm, bornes incluses, et plus préférentiellement comprise dans la plage allant de 0,9 à 5,1 mm, bornes incluses. Elles peuvent être recouvertes ou non d'une ou plusieurs couches minces telle qu'une ou plusieurs couches anti-IR par exemple à l'argent ou une ou plusieurs couches dites *Low-E* : ces couches ne sont pas prises en compte dans les plages d'épaisseurs précitées.

Selon un autre aspect, l'invention propose un dispositif de bombage d'une feuille de verre, comprenant :
- un dispositif conformateur pour bomber une feuille de verre préalablement portée à une température de ramollissement, par passage par déplacement continu dans le dispositif conformateur, le dispositif conformateur étant agencé pour, au fur et à mesure du passage de la feuille de verre dans le dispositif conformateur, la bomber et la soumettre à un refroidissement forcé de manière à solidifier l'ensemble de la feuille de verre à l'état bombée,
- un système de soufflage local de gaz pour souffler du gaz, de préférence de l'air, de manière locale sur une face de la feuille de verre lors de son passage dans le dispositif conformateur, le système de soufflage local de gaz étant agencé pour souffler du gaz de manière locale sur la face de la feuille de verre en amont du refroidissement forcé par rapport à la direction de déplacement de la feuille de verre dans le dispositif conformateur,
- un détecteur pour détecter un bord de la feuille de verre lors de son passage dans le dispositif conformateur en amont du système de soufflage local de gaz par rapport à la direction de déplacement de la feuille de verre dans le dispositif conformateur, et
- un système de commande prévu pour commander le système de soufflage local de gaz en fonction du temps écoulé à compter d'un signal de détection du bord de la feuille de verre fourni par le détecteur.

Ce dispositif de bombage d'une feuille de verre est susceptible d'être utilisé pour mettre en œuvre le procédé de l'invention décrit plus haut.

Suivant des modes de réalisation préférés, le dispositif de bombage d'une feuille de verre selon l'invention comprend une ou plusieurs des caractéristiques suivantes :
- le système de commande est apte à commander le système de soufflage local de gaz de manière à : déplacer la zone d'impact du soufflage local de gaz sur la face de la feuille de verre transversalement à la direction de déplacement de la feuille de verre dans le dispositif conformateur en fonction du temps écoulé à compter de la détection de l'arrivée de la feuille de verre dans le dispositif conformateur ; et/ou activer et désactiver le soufflage local de gaz en fonction du temps écoulé à compter du signal de détection du bord de la feuille de verre fourni par le détecteur ; et/ou modifier la pression du gaz de soufflage local en fonction du temps écoulé à compter du signal de détection du bord de la feuille de verre fourni par le détecteur ;
- le système de soufflage local de gaz comprend au moins une buse ;
- le système de soufflage local de gaz comprend un dispositif de déplacement de la buse pour déplacer la buse transversalement à la direction de déplacement de la feuille de verre dans le dispositif conformateur, le système de commande étant apte à commander le système de déplacement de la buse en fonction du temps écoulé à compter du signal de détection du bord de la feuille de verre fourni par le détecteur ;
- le dispositif conformateur comprend un lit de rouleaux inférieurs et un lit de rouleaux supérieurs agencés pour faire passer entre eux la feuille de verre et pour imposer à la feuille de verre passant entre eux un trajet courbe dans la direction de déplacement de la feuille de verre de manière à bomber la feuille de verre ;
- la buse est disposée entre deux rouleaux successifs de l'un des lits de rouleaux, le dispositif de déplacement de la buse étant prévu pour déplacer la buse entre ces deux rouleaux successifs ;
- le dispositif conformateur est prévu pour soumettre la feuille de verre à une trempe thermique ou à un durcissement thermique au moyen dudit refroidissement forcé de la feuille de verre ;
- le dispositif comprend en outre un ensemble de buses de soufflage de gaz pour soumettre la feuille de verre audit refroidissement forcé, les buses dudit ensemble étant réparties transversalement à la direction de défilement de la feuille de verre et disposées entre des rouleaux successifs (21 ; 22) d'au moins un des lits de rouleaux, de préférence des deux lits de rouleaux.

Dans le cadre de l'invention, on entend par rouleau du lit de rouleaux inférieurs et du lit de rouleaux supérieurs, tout type d'élément de révolution qui par sa forme et/ou sa disposition peut conférer une courbure aux feuilles de verre. Il s'agit par exemple de cylindres, de dispositifs du type diabolo-tonneau, de systèmes coniques, de systèmes contrefléchis, de tiges à profil longitudinal courbe munies d'une gaine pouvant tourner autour de la tige, etc. En particulier, il peut par exemple s'agir de rouleaux tels que décrits dans US 4,139,359, US 5,069,705, US 5,094,679, US 5, 236, 487 ou US 2015/0259234 A1.

Dans le cadre de l'invention, la trempe thermique d'une feuille de verre s'entend comme conférant à la feuille de verre une contrainte de surface supérieure à 90 MPa, généralement entre 90 et 200 MPa. Une semi-trempe thermique - également dénommée durcissement thermique - s'entend comme conférant à la feuille de verre une contrainte de surface comprise dans le domaine allant de 15 à 90 MPa, plus généralement comprise dans le domaine allant de 20 à 60 MPa. Les valeurs de contrainte précitées sont des valeurs absolues. Une contrainte de surface est mesurable par un appareil fonctionnant sur le principe de la polariscopie, comme le polariscope Scalp-04 commercialisé par la société GlasStress Ltd. Sa valeur est déterminée comme étant une moyenne arithmétique de cinq mesures sur une surface principale de la feuille de verre, une mesure étant réalisée au milieu de la feuille de verre - qui peut être choisie comme étant son centre d'inertie - et quatre autres mesures qui sont réparties à égales distances sur une ligne fictive faisant le tour de la surface principale de la feuille de verre à une distance du bord périphérique de la feuille de verre égale à dix fois l'épaisseur de la feuille. Mais pour ce qui concerne le cas particulier des feuilles de verre à quatre coins, il est préférable que chacune de ces quatre mesures soient réalisées sur cette ligne fictive dans un coin respectif de la feuille de verre.

D'autres aspects, caractéristiques et avantages de l'invention apparaîtront à la lecture de la description qui suit d'un mode de réalisation préféré de l'invention, donnée à titre d'exemple et en référence aux dessins annexés.
[Fig 1] est une représentation schématique vue de côté d'une installation de bombage selon un mode de réalisation de l'invention.
[Fig 2] est une représentation schématique partielle vue de côté du dispositif conformateur de l'installation de la figure 1.
[Fig 3] est une représentation schématique isolée et simplifiée du seul lit de rouleaux inférieurs du dispositif conformateur de la figure 2 vue de dessus, ainsi que de la buse mobile de soufflage locale d'air et du détecteur prévu pour détecter un bord de la feuille de verre.
[Fig 4] illustre une vitre latérale de véhicule automobile présentant un sur-bombage le long de son bord supérieur qui est susceptible d'être produite avec l'installation de la figure 1.
[Fig 5] est un graphe du déplacement de la vitre de la figure 4 en fonction du temps dans le dispositif conformateur de l'installation de la figure 1.
[Fig 6] est un graphe du déplacement transversal de la buse de soufflage local d'air du dispositif conformateur de l'installation de la figure 1 en fonction du temps pour obtenir le sur-bombage souhaitée le long du bord supérieur de la vitre de la figure 4.
[Fig 7] est un graphe représente la courbe du lieu de soufflage d'air sur la vitre de la figure 4 obtenu par la combinaison du déplacement de la vitre dans le dispositif conformateur conformément au graphe de la figure 5 et du déplacement de la buse de soufflage local d'air conformément à la figure 6.
[Fig 8] représente la courbe de la figure 7 sur la vitre de la figure 4.

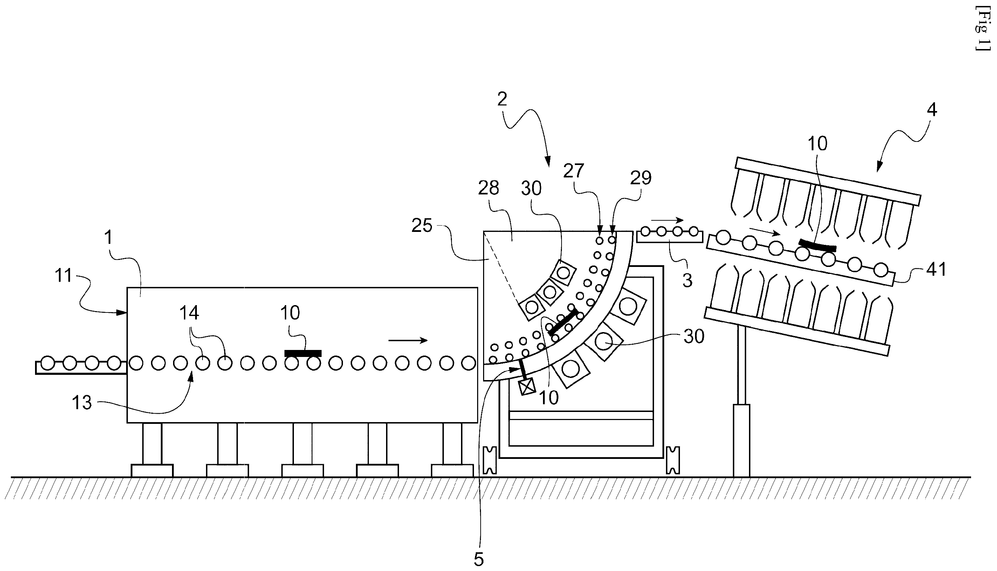

En référence aux figures, nous allons décrire dans la suite un mode de réalisation de l'invention. La Figure 1 représente schématiquement une installation de bombage dans laquelle des feuilles de verre 10 défilent en continu pour y être bombées. Cette installation comprend successivement une zone de réchauffage 1, un dispositif conformateur 2 dans lequel les feuilles de verre sont bombées et figées dans la forme bombée par refroidissement, et une zone de refroidissement secondaire 4 où les feuilles de verre subissent un refroidissement final.

Pour une feuille de verre 10 donnée, le processus de bombage se déroule comme suit.

La feuille de verre 10 à l'état plan passe d'abord par la zone de réchauffage 1 pour y être portée à une température de ramollissement permettant ensuite le bombage par le dispositif conformateur 2. La température de ramollissement est généralement de 600 à 700°C.

La zone de réchauffage 1 comprend un four 11 préférentiellement de type tunnel à travers lequel la feuille de verre 21 est transportée sur un convoyeur 13. Le convoyeur 13 est de préférence horizontal et mue par une série de rouleaux moteurs rectilignes 14 alignés dans un plan. La feuille de verre 10 est ainsi transportée suivant un trajet rectiligne horizontal. Après avoir quitté le four 11, la feuille de verre 10 portée à la température de ramollissement pénètre dans le dispositif conformateur 2 où elle va être bombée. Le dispositif conformateur 2 est donc situé hors du four 11, ou plus généralement, hors de la zone de réchauffage 1.

Le dispositif conformateur 2 peut de manière connue comprendre un lit de rouleaux inférieurs 29 et un lit de rouleaux supérieurs 27 agencés pour faire passer entre eux la feuille de verre 10. Dans l'exemple illustré, les lits de rouleaux 27, 29 sont conçus pour imposer un trajet courbe ascendant à la feuille de verre 21 dans la direction de déplacement de la feuille de verre 10 pour bomber la feuille de verre. Autrement dit, la feuille de verre 10 acquière dans le dispositif conformateur 2 une courbure imposée par les rouleaux des lits de rouleaux 27, 29 au fur et à mesure de son déplacement à travers le dispositif conformateur 2. En variante, le trajet imposé par les lits de rouleaux 27, 29 peut être descendant. Le trajet courbe imposé à la feuille de verre 10 par les lits de rouleaux 27, 29 est de préférence tangent au trajet rectiligne de la feuille de verre 10 avant de passer entre les lits de rouleaux 27, 29.

La courbure imposée par les lits de rouleaux 27, 29 dans la direction de déplacement de la feuille de verre 10 peut classiquement être d'au moins 0,8 mètre à l'infini.

Les rouleaux des lits de rouleaux 27, 29 sont des éléments tournants. Au moins certains d'entre eux, et préférentiellement tous, sont entrainés en rotation pour faire avancer la feuille de verre 10 entre eux. Comme déjà mentionné, il peut s'agir de tout type d'éléments de révolution qui par leur forme et/ou leur disposition qui permettent de conférer une courbure aux feuilles de verre lors de leur passage entre les lits de rouleaux 27, 29.

En particulier, les lits de rouleaux 27, 29 peuvent être prévus pour conférer classiquement à la feuille de verre 10 une courbure de 5 mètres à l'infini dans la direction perpendiculaire à la direction de déplacement de la feuille de verre 10.

Dans ce mode de réalisation, le bombage de la feuille de verre 10 est réalisé dans une première zone 25 du dispositif conformateur 2 qui est donc une zone de mise en forme. Un système de soufflage local d'air 5 est prévu dans la zone de mise en forme 25 qui sera décrit plus en détail plus loin.

La zone de mise en forme 25 est suivie par une deuxième zone du dispositif conformateur 2 laquelle définit une zone 28 de trempe ou de refroidissement de la feuille de verre 10. Cette zone 28 permet donc de soumettre la feuille de verre 10 à une trempe thermique ou bien à un durcissement thermique, aussi appelé semi-trempe, ou plus généralement à un refroidissement forcé réduisant la température de la feuille de verre 10 suffisamment pour que la feuille de verre 10 conserve sa forme bombée lorsqu'elle quitte le dispositif conformateur 2. En conséquence de ce refroidissement forcé, la température de la feuille de verre 10 est abaissée à une température comprise préférentiellement entre 400 et 500°C, la feuille de verre 10 quittant le dispositif conformateur 2 à cette température.

Les organes de trempe ou de refroidissement peuvent être constitués de manière connue par un ensemble de buses de soufflage d'air disposées notamment transversalement à la direction de déplacement de la feuille de verre 10 et de préférence de part et d'autre des rouleaux des lits de rouleaux 27, 29. Elles sont agencées pour souffler de l'air sur la feuille de verre 10 entre des rouleaux consécutifs des lits de rouleaux 27, 29. Elles sont de préférence agencées de manière fixe. Elles peuvent notamment être réunies en caissons de soufflage 30 ou en barrettes transversales disposés de part et d'autre des rouleaux 27 et 29. Les buses de soufflage agissent ainsi sur les deux faces de la feuille de verre 10 de manière qu'en passant entre les caissons 30 et suivant la pression de soufflage choisie, la feuille de verre 10 est soit trempée, soit simplement durcie, ou tout au moins refroidie dans sa conformation bombée pour lui conserver cette conformation après avoir quitté le dispositif conformateur 2.

La feuille de verre 10 peut quitter les lits de rouleaux 27, 29 du dispositif conformateur 2 en basculant sur un convoyeur 3 lequel transporte la feuille de verre 10 jusqu'à un convoyeur plan 41 qui traverse une zone de refroidissement secondaire 4 pour encore abaisser la température de la feuille de verre 10.

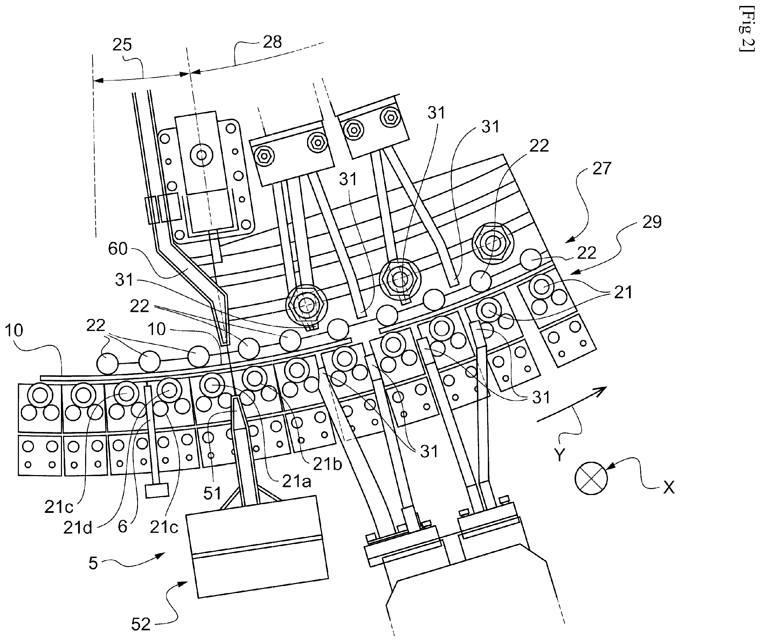

Le dispositif conformateur 2 est illustré plus en détail à la figure 2. Y sont visibles les rouleaux 22 du lit de rouleaux supérieurs 27 et les rouleaux 21 du lit de rouleaux inférieurs 29, ainsi que les buses de soufflage d'air 31 de la zone 28 pour tremper ou refroidir la feuille de verre 10 après bombage dans la zone de mise en forme 25.

Est également visible le système de soufflage local d'air 5 situé dans la zone de mise en forme 25, en amont donc des buses de soufflage d'air 31 pour tremper ou refroidir la feuille de verre 10. Celui-ci comprend une buse 51 de soufflage d'air agencée entre deux rouleaux consécutifs - référencés 21a et 21b - du lit de rouleaux inférieurs 29. La buse 51 est positionnée et dimensionnée pour souffler localement de l'air sur la feuille de verre 10 lors de son passage devant la buse 51. Autrement dit, l'air soufflé par la buse 51 n'impacte la feuille de verre 10 que de manière locale sur une zone d'impact de taille limitée par rapport à celle de la face de la feuille de verre 10.

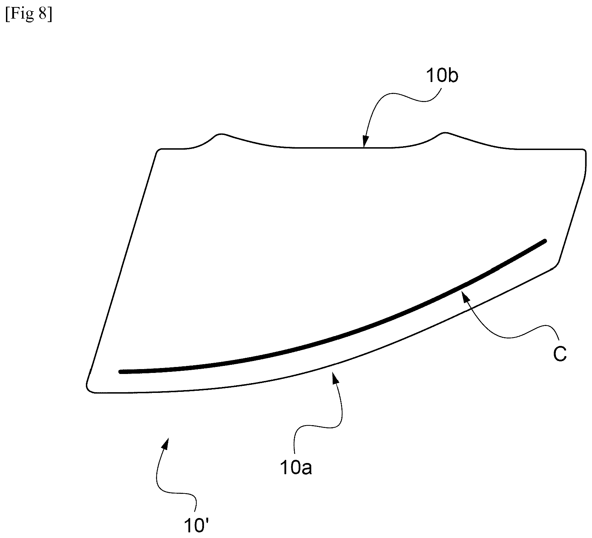

La buse 51 est préférentiellement montée mobile en translation dans la direction latérale X qui est perpendiculaire à la direction de déplacement Y de la feuille de verre 10 à travers le dispositif conformateur 2. Le système de soufflage local d'air 5 peut alors avantageusement comprendre un dispositif de déplacement 52 pour déplacer la buse 51 dans la direction X entre les deux rouleaux consécutifs 21a et 21b. Cela permet donc de varier la position latérale de la buse 51, et donc la position latérale de la zone d'impact du soufflage d'air sur la feuille de verre 10 lors de son passage dans le dispositif conformateur 2. Pour ce faire, la buse 51 est alimentée en air comprimé par un tuyau d'alimentation souple. Il est avantageux que la vitesse de déplacement de la buse 51 dans la direction X puisse être variée et commandée. Ainsi, la buse 51 peut suivre une courbe souhaitée qui s'étend transversalement sur la feuille de verre 10 par rapport à sa direction de défilement dans le dispositif conformateur 2, par exemple le long d'un bord transversal de la feuille de verre 10 comme il sera décrit en référence à la figure 8.

Par ailleurs, un détecteur 6 est installé - de préférence de manière fixe - entre deux autres rouleaux consécutifs - référencés 21c et 21d - du lit de rouleaux inférieurs 29 en amont par rapport à la buse 51. Ce détecteur 6 est prévu pour détecter le bord de la feuille de verre 10 et sert à commander le soufflage local d'air opéré par la buse 51 en synchronisation avec le déplacement de la feuille de verre 10 dans le dispositif conformateur 2. Comme nous le verrons plus en détail plus loin, la commande du soufflage local d'air peut se faire avantageusement selon trois aspects ou tout au moins selon un ou deux d'entre eux, à savoir la commande du déplacement de la buse 51 au moyen du dispositif de déplacement 52, l'activation et la désactivation du soufflage d'air par la buse 51 et la commande du niveau de pression de l'air soufflé par la buse 51.

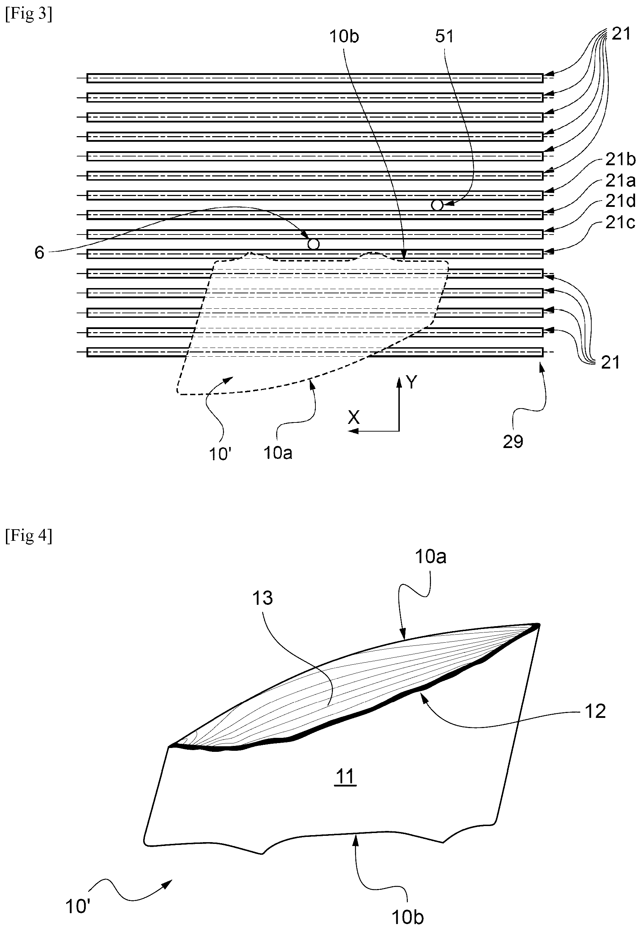

La figure 3 illustre symboliquement une position de la buse 51 entre les deux rouleaux 21a et 21b du lit de rouleaux inférieurs 29 et la position du détecteur 6 entre les rouleaux 21c et 21d.

Le système de soufflage local d'air 5 sert à provoquer une modification de la forme du bombage de la feuille de verre 10 obtenue après son passage dans le dispositif conformateur 2 par rapport à la forme du bombage qui serait obtenue en l'absence du soufflage local d'air par le système de soufflage local d'air 5. Cela est obtenu notamment par un choix approprié des conditions de température et de pression du soufflage d'air par la buse 51.

En particulier, la température de l'air soufflé par la buse 51 sur la feuille de verre 10 est choisie différente de celle de la feuille de verre 10 de manière que la zone de la face de la feuille de verre 10 soumise à son soufflage présente un gradient thermique se traduisant après refroidissement de la feuille de verre dans la zone 28 de trempe ou refroidissement par une modification du bombage de la feuille de verre 10 dans la zone correspondante.

L'air soufflé par la buse 51 est de préférence plus froid que la température de la feuille de verre 10. Il peut s'agir avantageusement d'air à la température ambiante, ce qui évite de chauffer ou refroidir l'air de soufflage.

S'agissant d'un soufflage d'air tendant à faire baisser la température de la face de la feuille de verre 10 recevant le soufflage d'air de la buse 51, si ce soufflage est appliqué sur la face convexe de la feuille de verre 10 comme c'est le cas dans l'exemple illustré, il aura pour effet d'augmenter localement - c'est-à-dire aux endroits ayant reçu le soufflage - la concavité de la feuille de verre 10 en comparaison avec la concavité obtenue en l'absence dudit soufflage d'air. Si au contraire le soufflage d'air de la buse 51 est appliqué sur la face concave de la feuille de verre 10, il aura pour effet de diminuer localement la concavité de la feuille de verre 10 en comparaison avec la concavité obtenue en l'absence dudit soufflage d'air. L'effet est inverse si l'air soufflé par la buse 51 est plus chaud que la feuille de verre 10.

La concavité est augmentée ou diminuée selon le cas dans toutes les directions, c'est-à-dire à la fois dans le sens du défilement Y de la feuille de verre 10 et dans la direction latérale X, étant précisé que la modification globale de la concavité dépendra de la définition de la zone de la feuille de verre 10 soumise au soufflage d'air par la buse 51.

Du point de vue de la pression, le soufflage d'air par la buse 51 est préférentiellement réalisé à une pression de 10 x 10³ à 1000 x 10³ Pa, et encore plus préférentiellement de 50 x 10³ à 600 x 10³ Pa.

Grâce au dispositif de déplacement 52, il est possible de déplacer la zone d'impact du soufflage local d'air par la buse 51 sur la face de la feuille de verre 10 dans la direction latérale X. Il est ainsi possible de souffler localement de l'air avec la buse 51 sur une zone de la face de la feuille de verre 10 s'étendant transversalement à la direction de déplacement de la feuille de verre 10. L'étendue du déplacement latéral de la buse 51 permis par le dispositif de déplacement 52 est préférentiellement supérieur ou égal à l'extension latérale maximale des feuilles de verre 10 traitées par le dispositif conformateur 2.

Le déplacement latéral de la buse 51 au moyen du dispositif de déplacement 52 est réalisé en synchronisation avec le déplacement de la feuille de verre 10 à travers le dispositif conformateur 2. Cette synchronisation est opérée par un système de commande non représenté préférentiellement par commande du déplacement de la buse 51 en fonction du temps écoulé à compter d'un signal de détection du bord de la feuille de verre 10 que le système de commande reçoit du détecteur 6, étant rappelé que la feuille de verre 10 est déplacée de manière continue et préférentiellement à vitesse constante dans le dispositif conformateur 2.

Le système de commande est de préférence un ordinateur ou un automate programmable de manière à pouvoir personnaliser le déplacement de la buse 51 à différents modèles de feuille de verres et/ou à différentes conformations des feuilles de verre à obtenir grâce au soufflage local d'air de la buse 51.

Le système de commande peut aussi commander une électrovanne ou autre composant approprié pour activer et désactiver sélectivement le soufflage d'air de la buse 51 en fonction du temps écoulé à compter du signal de détection du bord de la feuille de verre 10 reçu du détecteur 6. Cela permet par exemple d'arrêter le soufflage d'air de la buse 51 entre deux feuilles de verre 10 successives et/ou de cantonner le soufflage d'air géographiquement et temporellement pendant le passage de la feuille de verre 10 devant la buse 51. En particulier, en maintenant la buse 51 à une position fixe dans la direction X lors du soufflage d'air, cela permet de souffler du gaz sur la feuille de verre 10 le long d'un ou plusieurs segments fictifs s'étendant exclusivement suivant l'axe Y et qui présentent une longueur limitée entre le bord amont et le bord aval de la feuille de verre. Le détecteur 6 est de préférence situé suffisamment en amont de la buse 51 pour tenir compte du temps de réaction de l'électrovanne par rapport à sa commande, ceci permettant de pouvoir effectivement souffler de l'air par la buse 51 en toute position entre le bord avant et le bord arrière de la feuille de verre 10 en référence à sa direction de déplacement Y dans le dispositif conformateur 2.

Le système de commande peut aussi être conçu pour commander le niveau de pression de l'air soufflé par la buse 51, ce qui permet d'adapter la pression pour différents modèles de feuille de verres et/ou pour différentes conformations des feuilles de verre à obtenir grâce au soufflage local d'air par la buse 51. Le système de commande peut en outre être conçu pour commander le niveau de pression de l'air soufflé en fonction du lieu d'impact du soufflage de gaz local sur la face de la feuille de verre 10. Cette fonctionnalité peut également être obtenue par la commande du niveau de pression de l'air soufflé en fonction du temps écoulé à compter du signal de détection du bord de la feuille de verre 10 reçu du détecteur 6 par le système de commande. Une telle commande de la pression de l'air soufflé par la buse 51 peut par exemple être mis en œuvre au moyen d'une électrovanne régulatrice de débit raccordée à une réserve d'air comprimé à une pression maximale, par exemple 10⁶ Pa. Plus particulièrement, la commande de la pression de l'air soufflé par la buse 51 est alors obtenue par la commande de l'ouverture de l'électrovanne en fonction du temps écoulé à compter du signal de détection du bord de la feuille de verre 10, sachant que pour ce type d'électrovanne, le débit d'air qu'elle laisse passer est fonction de son degré d'ouverture selon une courbe prédéfinie et que le débit est proportionnel à la différence de pression entre l'entrée et la sortie de l'électrovanne.

La commande du soufflage d'air peut se faire selon l'un seulement ou une combinaison des trois aspects qui viennent d'être décrits. En variante, la buse 51 de soufflage d'air est ainsi agencée fixement, le soufflage d'air de la buse 51 et/ou la pression de l'air soufflé étant alors avantageusement commandé sélectivement par le système de commande.

Dans la suite, nous allons décrire l'utilisation du dispositif conformateur 2 pour bomber une feuille de verre constitutive d'une vitre latérale 10' de véhicule automobile laquelle est représentée en vue de dessus à la figure 4. Celle-ci est également représentée sur la figure 3 sur le lit de rouleaux inférieurs 29 avant bombage.

A l'état final, la vitre 10' est bombée de façon dissymétrique avec un bombage accentuée dans une zone 13 longeant le bord supérieur 10a de la vitre. Cette accentuation du bombage est obtenue grâce à un soufflage local d'air dans la zone 13 à l'aide de la buse 51. Au contraire, la majeure partie de la vitre 10' correspondant à la zone 11 adjacente au bord inférieur 10b de la vitre présente un bombage moindre qui est celui obtenu sensiblement que par les lits de rouleaux 27, 29, c'est-à-dire sans soufflage d'air dans la zone 11 par la buse 51. Par commodité, la démarcation entre la zone 11 et la zone 13 a été dessinée par une ligne fictive 12, bien qu'en réalité la transition entre les deux zones 11 et 13 est progressive.

Etant donné qu'une telle vitre 10' entre dans le dispositif conformateur 2 comme illustré à la figure 3 avec son bord supérieur 10a s'étendant transversalement à la direction de déplacement de la vitre, un soufflage local d'air dans une position fixe comme dans US 2006/0010916 A1 ne permet pas d'accentuer le bombage le long de son bord supérieur. En revanche, le dispositif conformateur 2 le permet grâce au système de soufflage local d'air 5. Pour cela, le système de commande est programmé pour déplacer la buse 51 devant la zone 13 au fur et à mesure du déplacement de la vitre dans le dispositif conformateur 2 et y souffle de l'air de manière à provoquer l'accentuation du bombage souhaitée dans cette zone.

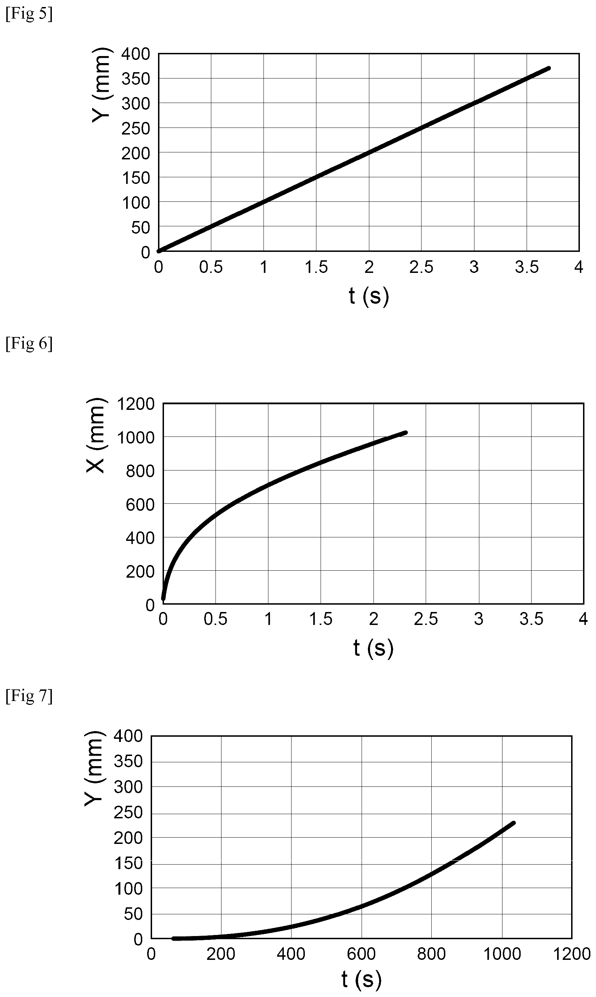

La figure 8 montre la vitre 10' avant bombage sur laquelle a été représentée la courbe fictive C correspondant au lieu décrit par le soufflage local de la buse 51 - plus précisément, il s'agit du lieu du centre de la zone d'impact du soufflage - sur la face convexe de la feuille de verre 10'. Cette courbe C résulte de la combinaison entre le déplacement continu à vitesse constante de la vitre 10' dans la direction Y de défilement de la vitre 10' à travers le dispositif conformateur 2 qui est illustré par le graphe de la figure 5 et le déplacement latéral de la buse 51 dans la direction X illustré par le graphe de la figure 6. La courbe C est le résultat de la combinaison des courbes des figures 5 et 6 comme le montre aussi la figure 7. Le soufflage d'air par la buse 51 le long de la courbe C est préférentiellement réalisé en continu. Par ailleurs, le système de commande est programmé pour activer le soufflage à la première extrémité de la courbe C et désactiver le soufflage à la deuxième extrémité de la courbe C.

Après traitement d'une feuille de verre 10' par le système de soufflage local d'air 5 suivant la courbe C, la buse 51 de celui-ci - qui est alors préférentiellement désactivé - est ramené vers le côté latéral opposé à une position initiale d'attente pour le traitement d'une prochaine vitre 10'.

Le recours à un système de soufflage d'air local 5 à buse mobile 51 présente l'avantage de permettre un traitement par soufflage local d'air d'une face des feuilles de verre 10 non seulement suivant une courbe oblique transversale, mais aussi de le faire avec un positionnement précis et une extension limitée dans la direction Y de déplacement des feuilles de verre 10. Ceci serait difficile, voire impossible à obtenir avec des buses de soufflage local d'air agencées fixement de manière adjacente dans la direction transversale X, ne serait-ce qu'en raison du temps de réaction des électrovannes d'activation et de désactivation du soufflage local d'air par chaque buse.

Le dispositif de déplacement 52 de la buse 51 peut être mise en œuvre par toute technologie appropriée permettant une commande adéquate de la vitesse de déplacement et une précision suffisante de déplacement. Etant donné que la vitesse de défilement des feuilles de verre 10 dans la direction Y peut atteindre jusqu'à 150 mm/s, la buse 51 peut être amenée à parcourir jusqu'à 1 mètre en 0,5 seconde. De ce point de vue, il est particulièrement approprié de recourir à un moteur linéaire car cette technologie permet à la fois des déplacements rapides et précis.

Le détecteur 6 peut être mis en œuvre par toute technologie appropriée pour détecter le bord de la feuille de verre 10. Il s'agit de préférence d'un détecteur basé sur une technologie sans contact. En particulier, il peut s'agir d'un détecteur optique tel qu'un capteur couplé à une fibre optique « voyant » passer devant elle la feuille de verre du fait qu'elle émet de la lumière, compte tenu de sa température élevée. Suivant un autre exemple, le détecteur optique peut être une barrière lumineuse basée par exemple sur un faisceau laser que la feuille de verre vient interrompre. Il peut aussi s'agir d'un détecteur à ultrason dans lequel la feuille de verre vient interrompre une transmission ultrasonore.

De nombreuses variantes au système de soufflage local d'air 5 décrit sont possibles. Selon une variante, il peut être prévu plusieurs systèmes de soufflage local d'air 5, la buse 51 de chacun étant agencée entre une paire respective de rouleaux 21 successifs dans la zone de mise en forme 25. Cette variante procure encore plus de possibilités pour influencer le bombage final de la feuille de verre 10. Par exemple, chaque système de soufflage de local d'air 5 peut traiter une même feuille de verre 10 dans des zones adjacentes ou encore des zones distinctes éloignées, ou éventuellement retraiter une même zone de celle-ci pour accroître l'effet modificateur de bombage recherché. Ou encore les systèmes de soufflage local d'air 5 peuvent intervenir successivement à chaque fois pour une feuille de verre 10 respective au fur et à mesure du défilement des feuilles de verre 10 dans le dispositif conformateur 2. Selon une autre variante, il peut être prévu plusieurs systèmes de soufflage local d'air 5, la buse 51 de chacun étant agencée entre une même paire de rouleaux 21 successifs dans la zone de de mise en forme 25. Cela permet de traiter plusieurs zones côte à côte avec des conditions propres.

Selon une autre variante, il peut être prévu alternativement ou en complément à celui ou ceux du côté du lit de rouleaux inférieurs 29, un ou plusieurs systèmes de soufflage local d'air du même type du côté du lit de rouleaux supérieurs 27, la buse 51 de chacun étant alors agencée entre une paire respective de rouleaux consécutifs 22 pour souffler sur la face concave de la feuille de verre 10.

Dans le cas où il est recouru à plusieurs systèmes de soufflage local d'air 5, ils peuvent partager un même système de commande ou avoir un système de commande propre. De même, un seul détecteur 6 peut être utilisé aux fins de synchronisation de la commande du soufflage local d'air de la buse 51 de chacun avec le déplacement de la feuille de verre à travers le dispositif conformateur 2, mais alternativement chacun peut utiliser un détecteur 6 propre.

Le recours à un ou plusieurs systèmes de soufflage local d'air 5 peut permettre de produire des feuilles de verre bombées présentant des variations de cote pouvant aller de 0,1 mm à 5 mm par rapport à un bombage sans un tel soufflage local d'air.

Le ou les systèmes de soufflage local d'air 5 peuvent aussi être combinés avec d'autres systèmes destinés à influencer le bombage final de la feuille de verre, par exemple avec des buses de soufflage fixes soufflant en continu à pression constante à la façon de US 2006/0010916 A1. Une telle buse fixe a été représentée sur la figure 2 sous la référence 60 du côté du lit de rouleaux supérieurs 27. Rien n'empêche non plus d'utiliser un gaz autre que l'air avec la buse 51, bien que l'air soit préféré en raison de son caractère économique et simple à mettre en œuvre.

## Revendications

1. Procédé de bombage d'une feuille de verre (10, 10'), comprenant :
- le passage par déplacement continu de la feuille de verre portée à une température de ramollissement dans un dispositif conformateur (2) dans lequel la feuille de verre est, au fur et à mesure de son passage dans le dispositif conformateur, bombée et soumise à un refroidissement forcé pour solidifier l'ensemble de la feuille de verre à l'état bombée, et
- le soufflage de gaz, de préférence de l'air, sur au moins une face de la feuille de verre lors de son passage dans le dispositif conformateur (2) lequel soufflage de gaz est appliqué sur l'au moins une face de la feuille de verre en amont du refroidissement forcé par rapport à la direction de déplacement de la feuille de verre dans le dispositif conformateur,
dans lequel ledit soufflage de gaz :
- est réalisé selon des conditions aptes à provoquer une modification de la forme du bombage de la feuille de verre obtenue après son passage dans le dispositif conformateur (2) par rapport à la forme du bombage qui serait obtenue en l'absence dudit soufflage de gaz, et
- comprend ou consiste en au moins un soufflage local de gaz impactant une face de la feuille de verre que de manière locale,
le procédé comprenant en outre la commande du soufflage local de gaz en fonction du temps écoulé à compter d'une détection de l'arrivée de la feuille de verre dans le dispositif conformateur.

2. Procédé selon la revendication 1, dans lequel la commande du soufflage local de gaz comprend une ou plusieurs ou l'ensemble des trois actions suivantes :
- le déplacement de la zone d'impact du soufflage local de gaz sur la face de la feuille de verre transversalement à la direction de déplacement (Y) de la feuille de verre dans le dispositif conformateur en fonction du temps écoulé à compter de la détection de l'arrivée de la feuille de verre dans le dispositif conformateur,
- l'activation et la désactivation du soufflage local de gaz en fonction du temps écoulé à compter de la détection de l'arrivée de la feuille de verre dans le dispositif conformateur, et
- la modification de la pression du gaz de soufflage local en fonction du temps écoulé à compter de la détection de l'arrivée de la feuille de verre dans le dispositif conformateur.

3. Procédé selon la revendication 1 ou 2, comprenant :
- l'utilisation d'au moins une buse (51) pour réaliser le soufflage local de gaz, et
- le déplacement de la buse (51) transversalement à la direction de déplacement (Y) de la feuille de verre en fonction du temps écoulé à compter de la détection de l'arrivée de la feuille de verre pour réaliser le déplacement de la zone d'impact du soufflage local de gaz sur la face de la feuille de verre transversalement à la direction de déplacement (Y) de la feuille de verre dans le dispositif conformateur.

4. Procédé selon l'une quelconque des revendications 1 à 3, dans lequel le refroidissement forcé de la feuille de verre comprend ou consiste en :
- la trempe thermique ou le durcissement thermique de la feuille de verre.

5. Procédé selon l'une quelconque des revendications 1 à 4, comprenant l'application du soufflage local de gaz au sein d'une zone partielle d'une face de la feuille de verre, la zone partielle présentant une forme allongée s'étendant transversalement à la direction de déplacement (Y) de la feuille de verre dans le dispositif conformateur, la zone d'impact du soufflage local de gaz sur la face de la feuille de verre étant déplacée en fonction du temps écoulé à compter d'une détection de l'arrivée de la feuille de verre dans le dispositif conformateur de manière à être déplacée au sein de ladite zone partielle pendant le déplacement de la feuille de verre dans le dispositif conformateur.

6. Procédé selon l'une quelconque des revendications 1 à 5, comprenant la réalisation du soufflage de gaz selon des conditions provoquant une augmentation locale d'une concavité du bombage de la feuille de verre obtenue après son passage dans le dispositif conformateur (2) par rapport à la concavité du bombage qui serait obtenue en l'absence du soufflage de gaz, ladite augmentation locale du bombage étant située le long d'un bord (10a) de la feuille de verre (10') s'étendant transversalement à la direction de défilement (Y) de la feuille de verre.

7. Procédé selon l'une quelconque des revendications 1 à 6, dans lequel la feuille de verre est une vitre latérale (10') de véhicule automobile, le procédé comprenant la commande du soufflage de gaz de manière à provoquer une augmentation locale du bombage située le long d'un bord supérieur (10a) de la vitre latérale de véhicule automobile par rapport à son montage prévu dans un véhicule automobile.

8. Procédé selon l'une quelconque des revendications 1 à 7, dans lequel le dispositif conformateur comprend un lit de rouleaux inférieurs (29) et un lit de rouleaux supérieurs (27), le procédé comprenant le passage par déplacement continu de la feuille de verre (10, 10') portée à une température de ramollissement, entre le lit de rouleaux inférieurs et le lit de rouleaux supérieurs lesquels sont agencés pour imposer à la feuille de verre un trajet courbe dans la direction de déplacement (Y) de la feuille de verre de manière à bomber la feuille de verre.

9. Dispositif de bombage d'une feuille de verre apte à la mise en œuvre du procédé selon l'une quelconque des revendications 1 à 8, comprenant :
- un dispositif conformateur (2) pour bomber une feuille de verre (10, 10') préalablement portée à une température de ramollissement, par passage par déplacement continu dans le dispositif conformateur, le dispositif conformateur étant agencé pour, au fur et à mesure du passage de la feuille de verre dans le dispositif conformateur, la bomber et la soumettre à un refroidissement forcé de manière à solidifier l'ensemble de la feuille de verre à l'état bombée,
- un système de soufflage local de gaz (5) pour souffler du gaz, de préférence de l'air, de manière locale sur une face de la feuille de verre lors de son passage dans le dispositif conformateur, le système de soufflage local de gaz (5) étant agencé pour souffler du gaz de manière locale sur la face de la feuille de verre en amont du refroidissement forcé par rapport à la direction de déplacement de la feuille de verre dans le dispositif conformateur,
- un détecteur (6) pour détecter un bord de la feuille de verre lors de son passage dans le dispositif conformateur en amont du système de soufflage local de gaz (5) par rapport à la direction de déplacement de la feuille de verre dans le dispositif conformateur, et
- un système de commande prévu pour commander le système de soufflage local de gaz en fonction du temps écoulé à compter d'un signal de détection du bord de la feuille de verre fourni par le détecteur (6).

10. Dispositif selon la revendication 9, dans lequel le système de commande est apte à commander le système de soufflage local de gaz de manière à :
- déplacer la zone d'impact du soufflage local de gaz sur la face de la feuille de verre transversalement à la direction de déplacement (Y) de la feuille de verre dans le dispositif conformateur en fonction du temps écoulé à compter de la détection de l'arrivée de la feuille de verre dans le dispositif conformateur, et/ou
- activer et désactiver le soufflage local de gaz en fonction du temps écoulé à compter du signal de détection du bord de la feuille de verre fourni par le détecteur (6), et/ou
- modifier la pression du gaz de soufflage local en fonction du temps écoulé à compter du signal de détection du bord de la feuille de verre fourni par le détecteur (6).

11. Dispositif de bombage selon la revendication 9 ou 10, dans lequel le système de soufflage local de gaz (5) comprend au moins une buse (51).

12. Dispositif de bombage selon la revendication 11, dans lequel le système de soufflage local de gaz (5) comprend un dispositif de déplacement de la buse (51) pour déplacer la buse (51) transversalement à la direction de déplacement (Y) de la feuille de verre dans le dispositif conformateur, le système de commande étant apte à commander le système de déplacement de la buse (51) en fonction du temps écoulé à compter du signal de détection du bord de la feuille de verre fourni par le détecteur (6).

13. Dispositif de bombage selon l'une quelconque des revendications 9 à 12, dans lequel le dispositif conformateur (2) comprend un lit de rouleaux inférieurs (29) et un lit de rouleaux supérieurs (27) agencés pour faire passer entre eux la feuille de verre et pour imposer à la feuille de verre passant entre eux un trajet courbe dans la direction de déplacement (Y) de la feuille de verre de manière à bomber la feuille de verre.

14. Dispositif selon la revendication 13 en ce qu'elle dépend de la revendication 12, dans lequel la buse (51) est disposée entre deux rouleaux successifs (21a, 21b) de l'un des lits de rouleaux (27, 29), le dispositif de déplacement de la buse (51) étant prévu pour déplacer la buse entre ces deux rouleaux successifs (21a, 21b).

15. Dispositif selon l'une quelconque des revendications 9 à 14, dans lequel le dispositif conformateur est prévu pour soumettre la feuille de verre à une trempe thermique ou à un durcissement thermique au moyen dudit refroidissement forcé de la feuille de verre.

16. Dispositif selon l'une quelconque des revendications 9 à 15, comprenant en outre un ensemble de buses (31) de soufflage de gaz pour soumettre la feuille de verre audit refroidissement forcé, les buses (31) dudit ensemble étant réparties transversalement à la direction de défilement (Y) de la feuille de verre et disposées entre des rouleaux successifs (21 ; 22) d'au moins un des lits de rouleaux (27, 29).

## Patentansprüche

1. Verfahren zum Biegen einer Glasscheibe (10, 10'), umfassend:
- den Durchgang durch kontinuierliche Bewegung der Glasscheibe, die auf eine Erweichungstemperatur gebracht wird, durch eine Formgebungsvorrichtung (2), in der die Glasscheibe während ihres Durchgangs durch die Formgebungsvorrichtung nach und nach gebogen und einer Zwangskühlung zum Verfestigen der Gesamtheit der Glasscheibe in dem gebogenen Zustand unterzogen wird, und
- das Blasen von Gas, vorzugsweise Luft, auf mindestens eine Fläche der Glasscheibe während ihres Durchgangs durch die Formgebungsvorrichtung (2), wobei das Blasen von Gas auf die mindestens eine Fläche der Glasscheibe stromaufwärts der Zwangskühlung relativ zu der Bewegungsrichtung der Glasscheibe in der Formgebungsvorrichtung angewendet wird,
wobei das Blasen von Gas:
- unter Bedingungen durchgeführt wird, die geeignet sind, eine Änderung der Form der Biegung der Glasscheibe, die nach ihrem Durchgang durch die Formgebungsvorrichtung (2) erhalten wird, relativ zu der Form der Biegung zu bewirken, die in der Abwesenheit des Blasens von Gas erhalten werden würde, und
- mindestens ein lokales Blasen von Gas umfasst oder daraus besteht, das eine Fläche der Glasscheibe nur auf lokale Weise beeinflusst,
das Verfahren umfassend ferner die Steuerung des lokalen Blasens von Gas in Abhängigkeit von der Zeit, die seit einer Erfassung der Ankunft der Glasscheibe in der Formgebungsvorrichtung verstrichen ist.

2. Verfahren nach Anspruch 1, wobei die Steuerung des lokalen Blasens von Gas eine oder mehrere oder die Gesamtheit der folgenden drei Aktionen umfasst:
- Bewegen der Beeinflussungszone des lokalen Blasens von Gas auf die Fläche der Glasscheibe quer zu der Bewegungsrichtung (Y) der Glasscheibe in der Formgebungsvorrichtung in Abhängigkeit von der Zeit, die seit der Erfassung der Ankunft der Glasscheibe in der Formgebungsvorrichtung verstrichen ist,
- Aktivieren und Deaktivieren des lokalen Blasens von Gas in Abhängigkeit von der Zeit, die seit der Erfassung der Ankunft der Glasscheibe in der Formgebungsvorrichtung verstrichen ist, und
- Ändern des Drucks des Gases des lokalen Blasens in Abhängigkeit von der Zeit, die seit der Erfassung der Ankunft der Glasscheibe in der Formgebungsvorrichtung verstrichen ist.

3. Verfahren nach Anspruch 1 oder 2, umfassend:
- Verwenden mindestens einer Düse (51) zum Durchführen des lokalen Blasens von Gas, und
- Bewegen der Düse (51) quer zu der Bewegungsrichtung (Y) der Glasscheibe in Abhängigkeit von der Zeit, die seit der Erfassung der Ankunft der Glasscheibe verstrichen ist, zum Durchführen der Bewegung der Beeinflussungszone des lokalen Blasens von Gas auf die Fläche der Glasscheibe quer zu der Bewegungsrichtung (Y) der Glasscheibe in der Formgebungsvorrichtung.

4. Verfahren nach einem der Ansprüche 1 bis 3, wobei die Zwangskühlung der Glasscheibe umfasst oder besteht aus:
- dem thermischen Härten oder dem thermischen Aushärten der Glasscheibe.

5. Verfahren nach einem der Ansprüche 1 bis 4, umfassend die Anwendung des lokalen Blasens von Gas innerhalb einer Teilzone einer Fläche der Glasscheibe, wobei die Teilzone eine längliche Form aufweist, die sich quer zu der Bewegungsrichtung (Y) der Glasscheibe in der Formgebungsvorrichtung erstreckt, wobei die Beeinflussungszone des lokalen Blasens von Gas auf die Fläche der Glasscheibe in Abhängigkeit von der Zeit, die seit einer Erfassung der Ankunft der Glasscheibe in der Formgebungsvorrichtung verstrichen ist, bewegt wird, um innerhalb der Teilzone während der Bewegung der Glasscheibe in der Formgebungsvorrichtung bewegt zu werden.

6. Verfahren nach einem der Ansprüche 1 bis 5, umfassend das Durchführen des Blasens von Gas unter Bedingungen, die eine lokale Erhöhung einer Konkavität der Biegung der Glasscheibe, die nach ihrem Durchgang durch die Formgebungsvorrichtung (2) erhalten wird, relativ zu der Konkavität der Biegung bewirken, die in der Abwesenheit des Blasens von Gas erhalten werden würde, wobei sich die lokale Erhöhung der Biegung entlang eines Randes (10a) der Glasscheibe (10') befindet, der sich quer zu der Laufrichtung (Y) der Glasscheibe erstreckt.

7. Verfahren nach einem der Ansprüche 1 bis 6, wobei die Glasscheibe eine Seitenscheibe (10') eines Kraftfahrzeugs ist, das Verfahren umfassend die Steuerung des Blasens von Gas, um eine lokale Erhöhung der Biegung, die entlang eines oberen Rands (10a) der Seitenscheibe des Kraftfahrzeugs gelegen ist, relativ zu ihrem vorgesehenen Einbau in einem Kraftfahrzeug zu bewirken.

8. Verfahren nach einem der Ansprüche 1 bis 7, wobei die Formgebungsvorrichtung ein Bett (29) von unteren Walzen und ein Bett (27) von oberen Walzen umfasst, das Verfahren umfassend den Durchgang durch kontinuierliche Bewegung der Glasscheibe (10, 10'), die auf eine Erweichungstemperatur gebracht wird, zwischen dem Bett von unteren Walzen und dem Bett von oberen Walzen, die zum Auferlegen der Glasscheibe eines gekrümmten Wegs in der Bewegungsrichtung (Y) der Glasscheibe angeordnet sind, um die Glasscheibe zu biegen.

9. Vorrichtung zum Biegen einer Glasscheibe, die geeignet ist, das Verfahren nach einem der Ansprüche 1 bis 8 zu implementieren, umfassend:
- eine Formgebungsvorrichtung (2) zum Biegen einer Glasscheibe (10, 10'), die zuvor auf eine Erweichungstemperatur gebracht wurde, durch den Durchgang durch kontinuierliches Bewegen durch die Formgebungsvorrichtung, wobei die Formgebungsvorrichtung zum Biegen davon, nach und nach während des Durchgangs der Glasscheibe durch die Formgebungsvorrichtung, und Unterziehen davon einer Zwangskühlung angeordnet ist, um die Gesamtheit der Glasscheibe in dem gebogenen Zustand zu verfestigen,
- ein lokales Gasblassystem (5) zum Blasen von Gas, vorzugsweise Luft, auf lokale Weise auf eine Fläche der Glasscheibe während ihres Durchgangs durch die Formgebungsvorrichtung, wobei das lokale Gasblassystem (5) zum Blasen von Gas auf lokale Weise auf die Fläche der Glasscheibe stromaufwärts der Zwangskühlung relativ zu der Bewegungsrichtung der Glasscheibe in der Formgebungsvorrichtung konfiguriert ist,
- einen Detektor (6) zum Erfassen eines Rands der Glasscheibe bei ihrem Durchgang durch die Formgebungsvorrichtung stromaufwärts des lokalen Gasblassystems (5) relativ zu der Bewegungsrichtung der Glasscheibe in der Formgebungsvorrichtung, und
- ein Steuersystem, das zum Steuern des lokalen Gasblassystems in Abhängigkeit von der Zeit vorgesehen ist, die seit einem Signal zum Erfassen des Randes der Glasscheibe verstrichen ist, das durch den Detektor (6) bereitgestellt wird.

10. Vorrichtung nach Anspruch 9, wobei das Steuersystem geeignet ist, das lokale Gasblassystem zu steuern zum:
- Bewegen der Beeinflussungszone des lokalen Blasens von Gas auf die Fläche der Glasscheibe quer zu der Bewegungsrichtung (Y) der Glasscheibe in der Formgebungsvorrichtung in Abhängigkeit von der Zeit, die seit der Erfassung der Ankunft der Glasscheibe in der Formgebungsvorrichtung verstrichen ist, und/oder
- Aktivieren und Deaktivieren des lokalen Blasens von Gas in Abhängigkeit von der Zeit, die seit dem Signal zum Erfassen des Rands der Glasscheibe verstrichen ist, das durch den Detektor (6) bereitgestellt wird, und/oder
- Ändern des Drucks des Gases des lokalen Blasens in Abhängigkeit von der Zeit, die seit dem Signal zum Erfassen des Randes der Glasscheibe verstrichen ist, das durch den Detektor (6) bereitgestellt wird.

11. Biegungsvorrichtung nach Anspruch 9 oder 10, wobei das lokale Gasblassystem (5) mindestens eine Düse (51) umfasst.

12. Biegungsvorrichtung nach Anspruch 11, wobei das lokale Gasblassystem (5) eine Düsenbewegungsvorrichtung (51) zum Bewegen der Düse (51) quer zu der Bewegungsrichtung (Y) der Glasscheibe in der Formgebungsvorrichtung umfasst, wobei das Steuersystem geeignet ist, das Düsenbewegungssystem (51) in Abhängigkeit von der Zeit zu steuern, die seit dem Signal zum Erfassen des Randes der Glasscheibe verstrichen ist, das durch den Detektor (6) bereitgestellt wird.

13. Biegungsvorrichtung nach einem der Ansprüche 9 bis 12, wobei die Formgebungsvorrichtung (2) ein Bett (29) unterer Walzen und ein Bett (27) oberer Walzen umfasst, die zum Durchgehenlassen der Glasscheibe dazwischen und zum Auferlegen der Glasscheibe, die dazwischen hindurchgeht, eines gekrümmten Wegs in der Bewegungsrichtung (Y) der Glasscheibe angeordnet sind, um die Glasscheibe zu biegen.

14. Vorrichtung nach Anspruch 13, soweit er von Anspruch 12 abhängt, wobei die Düse (51) zwischen zwei aufeinanderfolgenden Walzen (21a, 21b) eines der Walzenbetten (27, 29) angeordnet ist, wobei die Vorrichtung zum Bewegen der Düse (51) zum Bewegen der Düse zwischen diesen zwei aufeinanderfolgenden Walzen (21a, 21b) vorgesehen ist.

15. Vorrichtung nach einem der Ansprüche 9 bis 14, wobei die Formgebungsvorrichtung zum Unterziehen der Glasscheibe einem thermischen Härten oder einem thermischen Aushärten mittels der Zwangskühlung der Glasscheibe vorgesehen ist.

16. Vorrichtung nach einem der Ansprüche 9 bis 15, ferner umfassend eine Gesamtheit von Gasblasdüsen (31) zum Unterziehen der Glasscheibe der Zwangskühlung, wobei die Düsen (31) der Gesamtheit quer zu der Laufrichtung (Y) der Glasscheibe verteilt und zwischen aufeinanderfolgenden Walzen (21; 22) mindestens eines der Walzenbetten (27, 29) angeordnet sind.

## Claims

1. A method for curving a glass sheet (10, 10') comprising:
- moving the glass sheet at a softening temperature continuously through a forming device (2) in which the glass sheet is curved and subjected to forced cooling as the glass sheet passes through the forming device to solidify the entire glass sheet in the curved state, and
- blowing gas, preferably air, onto at least one face of the glass sheet as the glass sheet passes through the forming device (2), said gas being blown on to at least one face of the glass sheet upstream of the forced cooling in relation to the direction of movement of the glass sheet through the forming device,
in which said gas blowing:
- is carried out under conditions liable to cause a modification in the form of the curvature of the glass sheet obtained after the glass sheet has passed through the forming device (2) compared to the form of the curvature that would be obtained without said gas blowing, and
- is or includes at least one local gas blowing affecting one face of the glass sheet locally only,
the method also including control of the local gas blowing as a function of the time elapsed since detection of the arrival of the glass sheet in the forming device.

2. The method as claimed in claim 1, in which control of the local gas blowing includes one or more or all of the three following actions:
- moving the impact zone of the local gas blowing on the face of the glass sheet transversely to the direction of movement (Y) of the glass sheet in the forming device as a function of the time elapsed since detection of the arrival of the glass sheet in the forming device,
- activating and deactivating the local gas blowing as a function of the time elapsed since detection of the arrival of the glass sheet in the forming device, and
- modifying the pressure of the local blowing gas as a function of the time elapsed since detection of the arrival of the glass sheet in the forming device.

3. The method as claimed in claim 1 or 2, including:
- the use of at least one nozzle (51) for the local gas blowing, and
- moving the nozzle (51) transversely to the direction of movement (Y) of the glass sheet as a function of the time elapsed since detection of the arrival of the glass sheet to move the impact zone of the local gas blowing on the face of the glass sheet transversely to the direction of movement (Y) of the glass sheet in the forming device.

4. The method as claimed in any one of claims 1 to 3, in which the forced cooling of the glass sheet includes or comprises:
- the thermal tempering or thermal toughening of the glass sheet.

5. The method as claimed in any one of claims 1 to 4, including the application of the local gas blowing in a partial zone of one face of the glass sheet, the partial zone having an elongate form extending transversely to the direction of movement (Y) of the glass sheet in the forming device, the impact zone of the local gas blowing on the face of the glass sheet being moved as a function of the time elapsed since detection of the arrival of the glass sheet in the forming device such as to be moved into said partial zone during the movement of the glass sheet in the forming device.

6. The method as claimed in any one of claims 1 to 5, including blowing gas under conditions causing a local increase of a concavity of the curvature of the glass sheet obtained after the glass sheet has passed through the forming device (2) in relation to the concavity of the curvature that would be obtained without said gas blowing, said local increase in the curvature being located along an edge (10a) of the glass sheet (10') extending transversely to the direction of movement (Y) of the glass sheet.

7. The method as claimed in any one of claims 1 to 6, in which the glass sheet is a motor-vehicle side window (10'), the method including controlling the gas blowing such as to cause a local increase in the curvature along an upper edge (10a) of the motor-vehicle side window in relation to the assembly thereof in a motor vehicle.

8. The method as claimed in any one of claims 1 to 7, in which the forming device includes a bed of lower rollers (29) and a bed of upper rollers (27), the method including moving the glass sheet (10, 10') at a softening temperature continuously between the bed of lower rollers and the bed of upper rollers, which are arranged to force the glass sheet to follow a curved route in the direction of movement (Y) of the glass sheet such as to curve the glass sheet.

9. A device for curving a glass sheet that is designed to implement the method as claimed in any one of claims 1 to 8, including:
- a forming device (2) designed to curve a glass sheet (10, 10'), previously brought to a softening temperature, by continuous movement through a forming device, the forming device being designed to curve the glass sheet and to subject the glass sheet to forced cooling as the glass sheet passes through the forming device to solidify the entire glass sheet in the curved state,
- a local gas blowing system (5) for blowing the gas, preferably air, locally onto a face of the glass sheet as the glass sheet passes through the forming device, the local gas blowing system (5) being designed to blow the gas locally onto the face of the glass sheet upstream of the forced cooling in relation to the direction of movement of the glass sheet through the forming device,
- a detector (6) for detecting an edge of the glass sheet during movement thereof through the forming device upstream of the local gas blowing system (5) in relation to the direction of movement of the glass sheet through the forming device, and
- a control system designed to control the local gas blowing system as a function of the time elapsed since a detection signal of the edge of the glass sheet provided by the detector (6).

10. The device as claimed in claim 9, in which the control system is designed to control the local gas blowing system such as to:
- move the impact zone of the local gas blowing on the face of the glass sheet transversely to the direction of movement (Y) of the glass sheet in the forming device as a function of the time elapsed since detection of the arrival of the glass sheet in the forming device, and/or
- activate and deactivate the local gas blowing as a function of the time elapsed since the detection signal of the edge of the glass sheet provided by the detector (6), and/or
- modify the pressure of the local blowing gas as a function of the time elapsed since the detection signal of the edge of the glass sheet provided by the detector (6).

11. The curving device as claimed in claim 9 or 10, in which the local gas blowing system (5) has at least one nozzle (51).

12. The curving device as claimed in claim 11, in which the local gas blowing system (5) includes a movement device of the nozzle (51) designed to move the nozzle (51) transversely to the direction of movement (Y) of the glass sheet in the forming device, the control system being designed to control the movement system of the nozzle (51) as a function of the time elapsed since the detection signal of the edge of the glass sheet provided by the detector (6).

13. The curving device as claimed in any one of claims 9 to 12, in which the forming device (2) includes a bed of lower rollers (29) and a bed of upper rollers (27) that are arranged to enable the glass sheet to pass therebetween and to force the glass sheet passing therebetween to follow a curved route in the direction of movement (Y) of the glass sheet in order to curve the glass sheet.

14. The device as claimed in claim 13 where dependent on claim 12, in which the nozzle (51) is arranged between two successive rollers (21a, 21b) of one of the beds of rollers (27, 29), the movement device of the nozzle (51) being designed to move the nozzle between these two successive rollers (21a, 21b).

15. The device as claimed in any one of claims 9 to 14, in which the forming device is designed to subject the glass sheet to thermal tempering or thermal toughening by means of said forced cooling of the glass sheet.

16. The device as claimed in any one of claims 9 to 15, also including a set of gas blowing nozzles (31) to subject the glass sheet to said forced cooling, the nozzles (31) of said set being distributed transversely to the direction of movement (Y) of the glass sheet and arranged between successive rollers (21; 22) of at least one of the beds of rollers (27, 29).
